# EUROPÄISCHE PATENTSCHRIFT

(11) **EP 1 240 209 B1**
(45) Veröffentlichungstag und Bekanntmachung des Hinweises auf die Patenterteilung: **08.09.2004**
(21) Anmeldenummer: 01967222.9
(22) Anmeldetag: 26.07.2001
(51) Int. Cl.: C08F 6/22, B29C 47/00, B29C 47/76, B29B 15/04

(54) **VERFAHREN ZUR REDUZIERUNG DES POLYMERGEHALTS IM ABWASSER BEI DER ENTWÄSSERUNG VON KUNSTSTOFF/WASSER-GEMISCHEN**
METHOD FOR REDUCING THE POLYMER CONTENT OF EFFLUENT DURING THE DRAINAGE OF POLYMER/WATER MIXTURES
PROCEDE POUR REDUIRE LA TENEUR EN POLYMERE D'EAUX USEES LORS DU DRAINAGE DE MELANGES MATIERE PLASTIQUE/EAU

(30) Priorität: 28.08.2000 DE 10042120
(43) Veröffentlichungstag der Anmeldung: 18.09.2002
(73) Patentinhaber: Röhm GmbH & Co. KG, 64293 Darmstadt (DE)
(72) Erfinder: HOESS, Werner, 63150 Heusenstamm (DE); SCHIKOWSKY, Hartmut, 64283 Darmstadt (DE); SADO, Krzysztof, 55128 Mainz (DE)
(86) Internationale Anmeldenummer: PCT/EP2001/008629
(87) Internationale Veröffentlichungsnummer: WO 2002/018453

(56) Entgegenhaltungen:
- DE-C- 19 718 597
- US-A- 4 148 991
- US-A- 4 299 952
- US-A- 4 539 396
- PATENT ABSTRACTS OF JAPAN vol. 013, no. 556 (C-664), 11. Dezember 1989 (1989-12-11) & JP 01 230605 A (HITACHI CHEM CO LTD), 14. September 1989 (1989-09-14)

## Beschreibung

### Stand der Technik

DE 38 42 796 C2 beschreibt klare schlagzähe Formmassen, aus 10 bis 90 Gew.-% einer Hartphase A), aufgebaut aus 80 - 100 Gew.-% (bez. auf A) Methylmethacrylat und 20 - 0 Gew.-% eines niederen Alkylacrylats, und B) 90 bis 10 Gew.-% einer in der Hartphase verteilten Zähphase mit einer Glastemperatur unter -10 °C, einer mittleren Teilchengröße der Zähphase unter 130 nm und einer Uneinheitlichkeit der Zähphasen-Teilchengröße von weniger als 0,5, aufgebaut aus mindestens 50 Gew.-% (bez. auf B) eines niederen Alkylacrylats und 0,5 bis 5 Gew.-% eines Pfropfvernetzers oder eines vernetzenden Monomeren mit drei oder mehr äthylenisch ungesättigten, radikalisch polymerisierbaren Resten sowie gegebenenfalls weiteren äthylenisch ungesättigten, radikalisch (co)polymerisierbaren, aliphatischen Comonomeren und C) nicht mehr als 0,05 Gew.-% an wasserlöslichen Bestandteilen,wobei wenigstens 15 Gew.-% der Hartphase mit der Zähphase kovalent verknüpft sind. Die Verarbeitung des Emulsionspolymerisats zur Formmasse erfolgt im Extruder, insbesondere in einem Doppelschnecken-Entgasungsextruder, wobei die Wasserphase flüssig abgetrennt wird. Angaben zum Polymergehalt im Abwasser sind nicht enthalten.

EP-A 0 683 028 beschreibt ein Verfahren zum Entwässern eines zweiphasigen flüssigen Gemischs aus einer thermoplastischen Kunststoffschmelze und einer Wasserphase in einem gegenläufigen Doppelschneckenextruder. Dabei kann die Koagulation des Kunststoff-Latex direkt im Extruder unter der Scherwirkung in der Koagulationszone bei einer Temperatur im thermoplastischen Bereich des Kunststoffs erfolgen. Die Schmelze wird dabei in teilgefüllten Schneckengängen gefördert und in wenigstens einem dieser Schneckengänge unter Bildung eines örtlich eng begrenzten, steilen Druckgradienten zu einem zusammenhängenden Schmelzekuchen gestaut. Auf diese Weise fließt das Wasser vor der Grenze des Schmelzekuchens unter Wirkung der Schwerkraft derart nach unten, daß der Schmelzekuchen nicht mit einer zusammenhängenden Wasserphase in Berührung steht. Unter Anwendung dieses Verfahrens kann der Wassergehalt eines Emulsionspolymerisats mit einem Ausgangs-Wasseranteil von 55 Gew.-% beispielsweise auf nur noch 8 Gew.-% Wasser reduziert werden. In einem Entgasungsextruder können anschließend die Restmengen an flüchtigen Anteilen durch eine Vorwärts- und Rückwärts-Entgasungszone weitgehend abgetrennt werden. Das an der Granulierdüse abgenommene Granulat hat schließlich eine Restfeuchte von nur noch 0,06 Gew.-%. Bei dreiphasigen Emulsionspolymerisaten werden als organische Substanz Restpolymergehalte im Abpreßwasser im Bereich von 0,4 Gew.-% gefunden.

DE 197 18 597 C1 beschreibt ein Verfahren zum Entwässern eines zweiphasigen flüssigen Gemischs aus einer thermoplastischen Kunststoffphase und einer Wasserphase durch
Koagulation des zweiphasigen flüssigen Gemischs in einem ersten Extruder, Entwässerung des Koagulats in einem Doppelschneckenextruder mit gegenläufigen Schnecken mit einer Entwässerungszone und
Abtrennen flüchtiger Bestandteile durch Entgasung
wobei als erster Extruder ein Einschneckenextruder oder ein Doppelschneckenextruder eingesetzt wird, wobei der Doppelschneckenextruder mit gleichlaufenden Schnecken ausgestattet ist. Bei dreiphasigen Emulsionspolymerisaten werden Restpolymergehalte im Abpreßwasser im Bereich von 0,35 Gew.-% erhalten.

### Aufgabe und Lösung

Bei der Entwässerung von zweiphasigen flüssigen Gemischen aus einer thermoplastischen Kunststoffschmelze und einer Wasserphase durch Koagulation der Kunststoffschmelze und Abpressen des Wasser aus dem Schmelzekuchen in einer Extruderanlage besteht das Problem, daß das Abwasser oft einen unerwünscht hohen Polymergehalt aufweist. Dieses Problem tritt insbesondere bei Emulsionspolymerisaten mit geringen Teilchengrößen auf, die sich in der Regel schlecht koagulieren lassen. Das Problem besteht auch bei Emulsionspolymerisaten mit größeren Teilchendurchmessern, die sich ansonsten koagulieren lassen und bei Standardfahrweise nur geringe Polymeranteile im Abwasser aufweisen, wenn die Durchsatzrate erhöht wird. In diesem Fall verschlechtert sich in der Regel die Koagulationsleistung, wodurch der Polymergehalt im Abwasser wieder ansteigt. Dies ist insbesondere nachteilig, da die abgetrennte Wasserphase somit das Polymer als Verunreinigung enthält und nicht weiter verwendet werden kann. Im Abwasser führt der Polymergehalt zu erhöhter Belastungen (CSB-Werte) der Kläranlage bei der Abwasseraufbereitung. Schließlich mindert der Polymerverlust die Ausbeute an der thermoplastischen Kunststoffschmelze. Es sollte daher ein Verfahren gefunden werden, das zu einer zur Reduzierung des Polymergehalts im Abwasser führt.

Die Aufgabe wird gelöst durch ein Verfahren zur Reduzierung des Polymergehalts im Abwasser bei der Entwässerung von zweiphasigen flüssigen Gemischs aus einer thermoplastischen Kunststoffschmelze und einer Wasserphase durch Koagulation der Kunststoffschmelze und Abpressen des Wasser aus dem Schmelzekuchen in einer Extruderanlage, dadurch gekennzeichnet, daß unmittelbar nach Einspeisen des zweiphasigen flüssigen Gemischs in die Extruderanlage überhitzter Wasserdampf mit einer Temperatur von mindestens 280 °C eingeleitet wird.

### Ausführung der Erfindung

Das Verfahren der Erfindung eignet sich zur Reduzierung des Polymergehalts im Abwasser bei der Entwässerung von zweiphasigen flüssigen Gemischs aus einer thermoplastischen Kunststoffschmelze und einer Wasserphase durch Koagulation der Kunststoffschmelze und Abpressen des Wasser aus dem Schmelzekuchen in einer Extruderanlage.

Das Verfahren eignet sich insbesondere für Emulsionspolymerisate mit einer mittleren Teilchengröße von 50 bis 130 nm (Gewichtsmittelwert) wie sie z. B. in DE 38 42 796 C2 allgemein und in konkreter Weise in den Beispielen beschrieben sind. Die Uneinheitlichkeit der Teilchengröße kann z. B. bei unter 0,2 liegen. Hierbei handelt es sich um Emulsionspolymerisate aus Latexteilchen mit einer thermoplastischen Hartphase und einer vernetzten Zähphase, die als zweischalige Schlagzähmodifizierungsmittel verwendet werden können.

Das Verfahren eignet sich weiterhin für ansonsten gut koagulierbare Emulsionspolymerisate mit mittleren Teichengrößen von über 130 nm bis 500 nm, insbesondere von 250 bis 400 nm, wenn die Anlagen mit erhöhtem Durchsatz betrieben werden und aus diesem Grund die Polymergehalte im Abwasser wieder unerwünscht zunehmen. Hier sind insbesondere Emulsionspolymerisate für dreischalig aufgebaute Schlagzähmodifizierungsmittel für Polymethylmethacrylat zu nennen, wie sie in EP-A 0 683 028 und in DE 197 18 597 C1 allgemein und konkret in den Beispielen beschrieben sind. Wird bei den in EP-A 0 683 028 und in DE 197 18 597 C1 beschriebenen Verfahren, die Polymerdurchsatzrate erhöht, z. B. verdoppelt, so verschlechtert sich in der Regel der Wärmeeintrag und damit die Koagulationsleistung. Dadurch können die ursprünglich sehr niedrigen Polymergehalte im Abwasser auf Werte über 1 Gew.-% oder über sogar über 2 Gew.-% ansteigen. In Verbindung mit der vorliegenden Erfindung können die Werte auch bei hohen Durchsatzraten wieder auf Werte unter 1 Gew.-%, insbesondere unter 0,5 Gew.-% gesenkt werden.

Das Verfahren eignet sich somit insbesondere für Latices.
Diese enthalten in der Regel 30 bis 50 Gew.-% an dispergierten Kunststoffteilchen, deren mittlere Teilchengröße z.B. 100 bis 500 nm betragen kann. Die Wasserphase macht dementsprechend 70 bis 50 Gew.-% aus; sie enthält im allgemeinen gelöste Emulgatoren, gegebenenfalls Koagulationsmittel oder andere Hilfs- und Fremdstoffe.

Die Latexteilchen bestehen aus thermoplastischen Kunststoffen, die im Schmelzezustand auf einem Extruder verarbeitbar sind. Dazu gehören thermoplastische Kunststoffe mit Glasübergangstemperaturen von 50 bis 300 °C bzw. einem Temperaturbereich im Schmelzezustand, in welchem sie hinreichend zersetzungsbeständig sind. Die Schmelzetemperatur im Doppelschneckenextruder liegt in der Regel zwischen 100 und 250 °C.

Wichtige Klassen von thermoplastischen Kunststoffen sind Copolymerisate auf der Basis von Butadien, Styrol und gegebenenfalls Acrylnitril, sowie Polyvinylchlorid, Polyacrylate bzw. Polymethacrylate. Eine weitere wichtige Klasse sind Latices von mehrphasigen thermoplastischen Kunststoffen, enthaltend Latexteilchen mit einer thermoplastischen Hartphase und einer vernetzten Zähphase. Sie können gegebenenfalls während des Verfahrens mit einem weiteren thermoplastischen Kunststoff, der in fester oder geschmolzener Form in den Doppelschneckenextruder eingebracht wird und mit dem Kunststoff der Hartphase des Latex übereinstimmt oder mit diesem verträglich ist, vermischt werden.
Vorzugsweise besteht der Kunststoff der Hartphase überwiegend aus Polymethylmethacrylat und der Kunststoff der Zähphase überwiegend aus vernetztem Polybutylacrylat, das zum Zwecke der Angleichung des optischen Brechungsindexes an den des Polymethylmethacrylats auch mit Styrol oder Benzylacrylat mischpolymerisiert sein kann. Typische Mischungen dieser Art enthalten z.B. 4 bis 50 Gew.-% des mehrphasigen Latex-Kunststoffes, worin der Polybutylacrylat-Anteil 2 bis 80 Gew.-% und der Polymethylmethacrylat-Anteil 20 bis 98 Gew.-% ausmachen
kann, sowie 2 bis 60 Gew.-% des thermoplastischen Polymethylmethacrylat-Kunststoffes. Wenn dieser nicht in geschmolzener Form eingebracht wird, ist es auch möglich, den Latex des mehrphasigen Kunststoffes mit einem Polymethylmethacrylat-Latex zu vermischen und die Latexmischung nach dem Verfahren der Erfindung zu verarbeiten.

Eine Extruderanlage zur Entwässerung von Emulsionspolymerisaten beinhaltet allgemein eine Koagulationszone, in der der Latex koaguliert wird und wo bei einem Betriebsdruck oberhalb des Wasserdampfdruckes durch scherende Elemente, wie Knet-, Misch- und Stauzonen die Phasentrennung eingeleitet wird. Weiterhin ist
eine Entwässerungszone vorhanden, aus der Wasser flüssig abgenommen wird. Hierbei werden insbesondere auch wasserlösliche Bestandteile wie Emulgatoren oder Elektrolyte abgetrennt.

Eine Entgasungszone ist von der Entwässerungszone durch eine druckabdichtende Stauzone getrennt und dient der Abtrennung von weiteren Wassers. Schließlich ist eine Pumpzone zum erneuten Druckaufbau und zum Austragen der Schmelze vorhanden. Die Funktionen können auf mehrere Aggregate bzw. Extruder verteilt sein.

Die Extruderanlage kann aus einem Doppelschneckenextruder mit gegenläufigen Schnecken bestehen, in dem die Koagulation der Kunststoffschmelze und Abpressen des Wasser aus dem Schmelzekuchen ausgeführt werden. Eine solche Anlage und das entsprechende Verfahren sind z. B. in der EP-A 0 683 028 beschrieben.

Die Extruderanlage kann weiterhin aus einem Einschneckenextruder oder einem Doppelschneckenextruder mit gleichlaufenden Schnecken bestehen, in dem die Koagulation ausgeführt wird und aus einem sich anschließenden Doppelschneckenextruder mit gegenläufigen Schnecken, in dem Koagulation und Abpressen ausgeführt werden, bestehen. Eine solche Anlage und das entsprechende Verfahren sind in der DE 197 18 597 C1 beschrieben.

Das erfindungsgemäße Verfahren wird ausgeführt, indem unmittelbar nach Einspeisen des zweiphasigen flüssigen Gemischs aus der thermoplastischen Kunststoffschmelze und der Wasserphase in die Extruderanlage überhitzter Wasserdampf mit einer Temperatur von mindestens 280 °C, bevorzugt 290 bis 300 °C, besonders bevorzugt 300 bis 320 °C eingeleitet wird. Die Einleitung in den Extruder geschieht dabei unter entsprechendem Druck von 25 bis 35 bar, insbesondere 28 bis 32 bar. Die eingeleitete Dampfmenge kann z. B. 1 bis 10, bevorzugt 2 bis 8, besonders bevorzugt 4 bis 6 kg Wasser pro Stunde betragen, jeweils bezogen auf einen Durchsatz von 10 bis 20 kg zu entwässerndes Kunststoff/Wasser-Gemisch.

Die Einspeisung erfolgt mittels entsprechender Gerätschaft, z. B. einer Speisewasserpumpe für Dampf mit Massedurchflußmesser und einen elektrisch beheizten und isolierten Dampferzeuger. Eine Laboranlage kann z. B. so ausgelegt sein, daß ein Dampferzeuger mit einer Heizleistung von 10 bis 15 kW verwendet wird. Dabei kann der Dampfdruck von z. B. 310 °C heißem Wasserdampf am Ausgang des Dampferzeugers in Bereich von 50 bar liegen und bei Eintritt in den Extruder im Bereich etwa 30 bar betragen..

Aus dem Doppelschneckenextruder wird der entwässerte Kunststoff in Form einer Schmelze ausgetragen. Dies kann mit Hilfe einer Granulierdüse geschehen, aus der eine Vielzahl dünner Stränge extrudiert, unter die Erweichungstemperatur gekühlt und zu einem handelsüblichen Formmassen-Granulat geschnitten wird. Man kann jedoch auch unmittelbar mit einer geeigneten Extrusionsdüse in an sich bekannter Weise ein geformtes Kunststoffprofil, z.B. eine Folie, extrudieren.

### BEISPIELE

### Beispiel 1 (Vergleichsbeispiel)

Es wird ein zweistufig aufgebautes Emulsionspolymerisat (Schlagzäh-Modifizierungsmittel für PMMA-Formmassen) mit folgender Zusammensetzung verarbeitet: (In Klammern Massenverhältnisse der mit Kurzbezeichnungen angegebenen Monomerbestandteile)
- Stufe I:: Butylacrylat/Allylmethacrylat im Verhältnis 98 : 2
- Stufe II:: Methylmethacrylat/Butylacrylat/3-(2-Benzotriazolyl)-2-hydroxy-5-tert-octylbenzylmethacrylamid im Verhältnis 89,1 : 8,0 : 2,9

Massenverhältnis I/II = 33,4/66,6
Massenverhältnis Polymerphase/Wasserphase = 40/60
Mittlere Teilchengröße: ca. 60 nm

Der Latex wird mit einer Membrandosierpumpe mit einem Massestrom von 15 kg/h in den Zylinder (Zone 1) eines dicht kämmenden, gegenläufigen Doppelschneckenextruders gepumpt. Die Schneckendurchmesser betragen 34 mm. Die Schnecken sind dreigängig mit einer Steigung von 30 mm. Die Schneckendrehzahl beträgt 115 U/min.

Die Koagulationszone hat eine Länge von 600 mm und ist beginnend mit Zone 1 in fünf Zonen (Zone 1 bis 5) unterteilt.

Die Solltemperaturen der Koagulationszonen betragen im Extruder Zone 1: 260 °C / Zone 2: 270 °C / Zone 3: 250 °C / Zone 4: 240 °C / Zone 5: 170 °C

Auf die Zone 5 folgt eine Entwässerungszone, die mit einer Rückhalteschnecke ausgerüstet ist und eine Länge von 120 mm hat.

In der Entwässerungszone sind die beiden Zylinder am tiefsten Punkt mit 2 mm breiten und 60 mm langen Schlitzen geöffnet. Unter diesen beiden Öffnungen ist der Sammelbehälter druckdicht montiert.

Der Sammelbehälter für das abgeschiedene Wasser wird über die Leitung unter einem Stickstoffdruck von 40 bar gehalten. Über eine Flüssigkeitsniveausteuerung wird über das Ventil eine Wassermenge von 5,27 kg/h abgezogen. Über ein Ventil wird der Zustrom zum nachgeschalteten Entgasungsextruder so geregelt, daß vor dem Ventil ein Schmelzedruck von 80 bar konstant eingehalten wird. Der Zustrom in den Entgasungsextruder enthält 8 Gew.-% Wasser.

Im Entgasungsextruder (Schneckendurchmesser 30 mm) werden die Restmengen an flüchtigen Anteilen durch zwei Entgasungszonen abgetrennt. Der Druck in der ersten Entgasungszone beträgt 100 mbar, in der nachfolgenden Entgasungszone 10 mbar. Das an einer Granulierdüse abgenommene Extrudat bzw. Granulat hat eine Restfeuchte von 0,06 Gew.-%.

Das in der Entwässerungszone abgeschiedene Wasser weist einen Polymergehalt von 2 Gew.-% auf.

### Beispiel 2 (Erfindungsgemäß)

Es wurde verfahren wie in Beispiel 1 mit dem Unterschied, daß unmittelbar nach Einspeisen des zweistufig aufgebautes Emulsionspolymerisats in die Extruderanlage überhitzter Wasserdampf eingebracht wurde.

Zwischen Zone 1 und Zone 2 mündet eine Leitung zum Einspeisen überhitzen Wasserdampfs, der über Speisewasserpumpe für Dampf mit Massedurchflußmesser und einen elektrisch beheizten und isolierten Dampferzeuger erzeugt wird. Die Heizplatte im Dampferzeuger ist auf 12 kW ausgelegt. Das Wasser wird dort quantitativ in Heißdampf von 310 °C überführt. Der sich einstellende Dampfdruck beträgt im Betrieb ca. 50 bar am Ausgang des Dampferzeugers; am Eintritt in den Exruder stellt sich ein Druck von ca. 30 bar (abhängig vom Dampfdurchsatz und Zylindertemperatur) ein. Zur Spülung der Rohrleitung und des Einspeiseventils ist ein Wasserspülkreislauf installiert.

Beim Einleiten von 5kg/h Heißdampf auf 15 kg Latex/Wasser-Gemisch steigt die Temperatur der Zylinderwandung in Zone 1 von 150 auf 190 °C und in Zone 2 von etwa 220 °C auf 260 °C. Die vor der Entwässerungszone in Zone 5. zudosierte Kühlwassermenge wurde von 9 kg/h auf 13 kg/h erhöht, Anderfalls wäre die Schmelzetemperatur zu hoch und damit die Schmelzeviskosität zu niedrig, was zu einem Abfließen der Schmelze über die Wasserkanäle und damit eingehender Verstopfung führen kann.

Das in der Entwässerungszone abgeschiedene Wasser weist einen Polymergehalt von 0,3 Gew.-% auf.

## Patentansprüche

1. Verfahren zur Reduzierung des Polymergehalts im Abwasser bei der Entwässerung von zweiphasigen flüssigen Gemischen aus einer thermoplastischen Kunststoffschmelze und einer Wasserphase durch Koagulation der Kunststoffschmelze und Abpressen des Wasser aus dem Schmelzekuchen in einer Extruderanlage, **dadurch gekennzeichnet, daß** unmittelbar nach Einspeisen des zweiphasigen flüssigen Gemischs in die Extruderanlage überhitzter Wasserdampf mit einer Temperatur von mindestens 280 °C eingeleitet wird.

2. Verfahren nach Anspruch 1, **dadurch gekennzeichnet, daß** die Extruderanlage aus einem Doppelschneckenextruder mit gegenläufigen Schnecken besteht, in dem Koagulation und Abpressen ausgeführt werden.

3. Verfahren nach Anspruch 1, **dadurch gekennzeichnet, daß** die Extruderanlage aus einem Einschneckenextruder oder einem Doppelschneckenextruder mit gleichlaufenden Schnecken besteht, in dem die Koagulation ausgeführt wird und aus einem Doppelschneckenextruder mit gegenläufigen Schnecken, in dem Koagulation und Abpressen ausgeführt werden, besteht.

4. Verfahren nach einem oder mehreren der Ansprüche 1 bis 3, **dadurch gekennzeichnet, daß** die zu entwässernde Kunststoffschmelze ein Emulsionspolymerisat mit einer mittleren Teilchengröße von von 50 bis 130 nm ist.

5. Verfahren nach Anspruch 4, **dadurch gekennzeichnet, daß** das Emulsionspolymerisat aus Latexteilchen mit einer thermoplastischen Hartphase und einer vernetzten Zähphase besteht.

6. Verfahren nach Anspruch 5, **dadurch gekennzeichnet, daß** die Hartphase überwiegend aus Polymethylmethacrylat und der Kunststoff der Zähphase überwiegend aus vernetztem Polybutylacrylat, das zum Zwecke des Brechungsangleichs auch mit Styrol oder Benzylmethacrylat mischpolymerisiert sein kann, besteht.

7. Verfahren nach einem oder mehreren der Ansprüche 1 bis 3, **dadurch gekennzeichnet, daß** die zu entwässernde Kunststoffschmelze ein Emulsionspolymerisat mit einer mittleren Teilchengröße von von über 130 bis 500 nm ist.

8. Verfahren nach Anspruch 8, **dadurch gekennzeichnet, daß** das Emulsionspolymerisat ein dreischalig aufgebautes Schlagzähmodifizierungsmittel für Polymethylmethacrylat ist.

## Claims

1. A method of reducing the polymer content of the effluent in the dewatering of two-phase liquid mixtures comprising a thermoplastic plastic melt and an aqueous phase, by coagulating the plastic melt and squeezing the water out of the melt cake in an extrusion apparatus, **characterised in that** immediately after the two-phase liquid mixture has been fed in, superheated steam is piped into the extrusion apparatus at a temperature of at least 280°C.

2. The method according to claim 1, **characterised in that** the extrusion apparatus comprises a twin-screw extruder with contra-rotating screws, in which coagulation and pressing-out are carried out.

3. The method according to claim 1, **characterised in that** the extrusion apparatus comprises a single-screw extruder or a twin-screw extruder with screws rotating in the same direction, in which coagulation is carried out, and a twin-screw extruder with contra-rotating screws, in which coagulation and pressing-out are carried out.

4. The method according to one or more of claims 1 to 3, **characterised in that** the plastic melt to be dewatered is an emulsion polymer with an average particle size of from 50 to 130 nm.

5. The method according to claim 4, **characterised in that** the emulsion polymer comprises latex particles with a thermoplastic hard phase and a cross-linked viscous phase.

6. The method according to claim 5, **characterised in that** the hard phase comprises predominantly polymethyl methacrylate and the plastic of the viscous phase comprises predominantly cross-linked polybutyl acrylate, which may also be copolymerised with styrene or benzyl methacrylate for the purpose of matching the refractive index.

7. The method according to one or more of claims 1 to 3, **characterised in that** the plastic melt to be dewatered is an emulsion polymer with an average particle size of more than 130 to 500 nm.

8. The method according to claim 8, **characterised in that** the emulsion polymer is an impact modifier, formed in three shells, for polymethyl methacrylate.

## Revendications

1. Procédé de réduction de la teneur en polymère des eaux usées lors du drainage de mélanges liquides à deux phases d'une fusion de matières synthétiques thermoplastiques et d'une phase aqueuse par coagulation de la fusion de matières synthétiques et expression de l'eau des gâteaux de fusion dans une installation d'extrusion,
**caractérisé en ce que**
directement après l'introduction du mélange liquide à deux phases dans l'installation d'extrusion, on amène de la vapeur d'eau surchauffée à une température d'au moins 280°C.

2. Procédé selon la revendication 1,
**caractérisé en ce que**
l'installation d'extrusion est constitué d'une extrudeuse à deux vis tournant en sens inverse, dans laquelle s'effectuent la coagulation et l'expression.

3. Procédé selon la revendication 1,
**caractérisé en ce que**
l'installation d'extrusion est constituée d'une extrudeuse à une vis ou d'une extrudeuse à deux vis tournant en sens inverse, dans laquelle s'effectue la coagulation et est constituée d'une extrudeuse à deux vis tournant en sens inverse, dans laquelle s'effectuent la coagulation et l'expression.

4. Procédé selon l'une ou plusieurs des revendications 1 à 3,
**caractérisé en ce que**
la fusion de matières synthétiques à drainer est un polymère en émulsion d'une grosseur de particules moyenne de 50 à 130 nm.

5. Procédé selon la revendication 4,
**caractérisé en ce que**
le polymère en émulsion est constitué de particules de latex avec une phase dure thermoplastique et une phase visqueuse réticulée.

6. Procédé selon la revendication 5,
**caractérisé en ce que**
la phase dure est constituée principalement d'un méthacrylate de polyméthyle et la matière synthétique de la phase visqueuse est constituée principalement de polybutylacrylate réticulé et qui peut être polymérisé en mélange avec du styrène ou de benzylméthacrylate à des fins de compensation de réfraction.

7. Procédé selon l'une ou plusieurs des revendications 1 à 3,
**caractérisé en ce que**
la fusion de matières synthétiques à drainer est un polymère en émulsion présentant une grosseur moyenne de particules plus grande que 130 à 500 nm.

8. Procédé selon la revendication 8,
**caractérisé en ce que**
le polymère en émulsion est un agent de modification de résistance aux chocs construit en trois couches pour méthacrylate de polyméthyle.
